# EUROPEAN PATENT APPLICATION

(11) **EP 4 033 459 A1**
(43) Date of publication of application: **27.07.2022**
(21) Application number: 21203673.5
(22) Date of filing: 20.10.2021
(51) Int. Cl.: G07C 5/00, H04W 4/44, G08G 1/00, H04W 4/029, G09B 29/00

(54) **METHOD OF COLLECTING DATA AND COMPUTER-READABLE RECORDING MEDIUM STORING DATA COLLECTION PROGRAM**

(30) Priority: 26.01.2021 JP 2021010001
(71) Applicant: FUJITSU LIMITED, Kawasaki-shi, Kanagawa 211-8588 (JP)
(72) Inventor: Ban, Ryoichi, Kawasaki-shi, Kanagawa, 211-8588 (JP); Asawa, Shun, Kawasaki-shi, Kanagawa, 211-8588 (JP); Amemiya, Kouichirou, Kawasaki-shi, Kanagawa, 211-8588 (JP)
(74) Representative: Hoffmann Eitle

(57) **Abstract**

A computer-implemented method of collecting data, the method including: collecting pieces of metadata associated with pieces of image data from a plurality of moving objects that hold the pieces of image data; and determining, when a specific piece of metadata that satisfies a condition is found in the collected pieces of metadata, based on information for making collected numbers of the pieces of image data close to be an equalized value and a map that manages the collected numbers in a mesh shape, whether to request transmission of a specific piece of image data with which the specific piece of metadata is associated to a specific moving object from which the specific piece of metadata is collected.

## Description

### FIELD

The embodiments discussed herein are related to a method of collecting data and a data collection program.

### BACKGROUND

There have been a known technique by which vehicle data is collected from a plurality of vehicles and a known technique by which a waste of communication costs is suppressed when collecting sensing information obtained by sensors of target vehicles.

Examples of the related art include as follows: Japanese Laid-open Patent Publication No. 2019-040305.

### SUMMARY

### [Technical Problem]

In some cases, image data from a camera mounted on a moving object such as a vehicle is collected from the moving object to create, for example, a map. In such cases, it is desired that the image data be entirely evenly collected. However, the image data is not necessarily entirely evenly collected. For example, there is a possibility that a piece of image data at a specific position is concentratedly collected and also a possibility that a piece of image data at a specific position is not collected at all. For example, there is a possibility that variation of the collection occurs in collecting the image data, and accordingly, the collected numbers of pieces of image data are not made to be an equalized value.

Accordingly, in one aspect, it is an object to provide a method of collecting data and a data collection program that makes collected numbers of pieces of image data close to an equalized value.

### [Solution to Problem]

According to an aspect of the embodiments, there is provided a computer-implemented method of collecting data. In an example, the method includes: collecting pieces of metadata associated with pieces of image data from a plurality of moving objects that hold the pieces of image data; and determining, when a specific piece of metadata that satisfies a condition is found in the collected pieces of metadata, based on information for making collected numbers of the pieces of image data close to be an equalized value and a map that manages the collected numbers in a mesh shape, whether to request transmission of a specific piece of image data with which the specific piece of metadata is associated to a specific moving object from which the specific piece of metadata is collected.

### [Advantageous Effects of Invention]

The collected numbers of the pieces of image data may be made to be close to an equalized value.

### BRIEF DESCRIPTION OF DRAWINGS

FIG. 1 explains an outline of a collection server;
FIG. 2 is a block diagram illustrating an example of a hardware configuration of the collection server;
FIG. 3 is a block diagram illustrating an example of a functional configuration of the collection server according to a first embodiment;
FIG. 4A is a block diagram illustrating an example of a hardware configuration of a vehicle, and FIG. 4B is a block diagram illustrating an example of a functional configuration of the vehicle;
FIG. 5 is a flowchart illustrating an example of processing executed by a metadata collection unit;
FIG. 6A explains an operation example of the metadata collection unit, and FIG. 6B explains states before and after metadata stored in the metadata DB is stored;
FIG. 7 is a flowchart illustrating an example of processing executed by a collection determination unit according to the first embodiment;
FIG. 8A explains part of an operation example of the collection determination unit, FIG. 8B illustrates an example of a collection request, and FIG. 8C explains metadata that satisfies the conditions;
FIG. 9 explains an example of a mesh size;
FIG. 10A explains part of another operation example of the collection determination unit, FIG. 10B explains a state in which a collection ratio is obtained from a mesh ID via a management map stored in a management map DB, FIG. 10C illustrates an example of management information, and FIG. 10D illustrates an example of a data request;
FIG. 11 explains states before and after the management information stored in the data request management DB is stored;
FIG. 12A is a flowchart illustrating an example of processing executed by a data request distribution unit, and FIG. 12B explains an operation example of the data request distribution unit;
FIG. 13 is a flowchart illustrating an example of processing executed by an image data storing unit;
FIG. 14A explains an operation example of the image data storing unit, and FIG. 14B explains a state before and after updating of the management map stored in the management map DB;
FIG. 15 is a block diagram illustrating an example of a functional configuration of the collection server according to a second embodiment;
FIG. 16 is a flowchart illustrating an example of part of processing executed by the collection determination unit according to the second embodiment;
FIG. 17A is another diagram explaining the state in which the collection ratio is obtained from the mesh ID via the management map stored in the management map DB, FIG. 17B explains an operation example of a data request adjustment unit, and FIG. 17C is another diagram illustrating an example of the data request; and
FIG. 18A is a flowchart illustrating an example of processing executed by a data request storing unit, and FIG. 18B is a flowchart illustrating an example of processing executed by a data request transmission unit.

### DESCRIPTION OF EMBODIMENTS

Hereinafter, embodiments of the present disclosure are described with reference to the drawings.

### (First Embodiment)

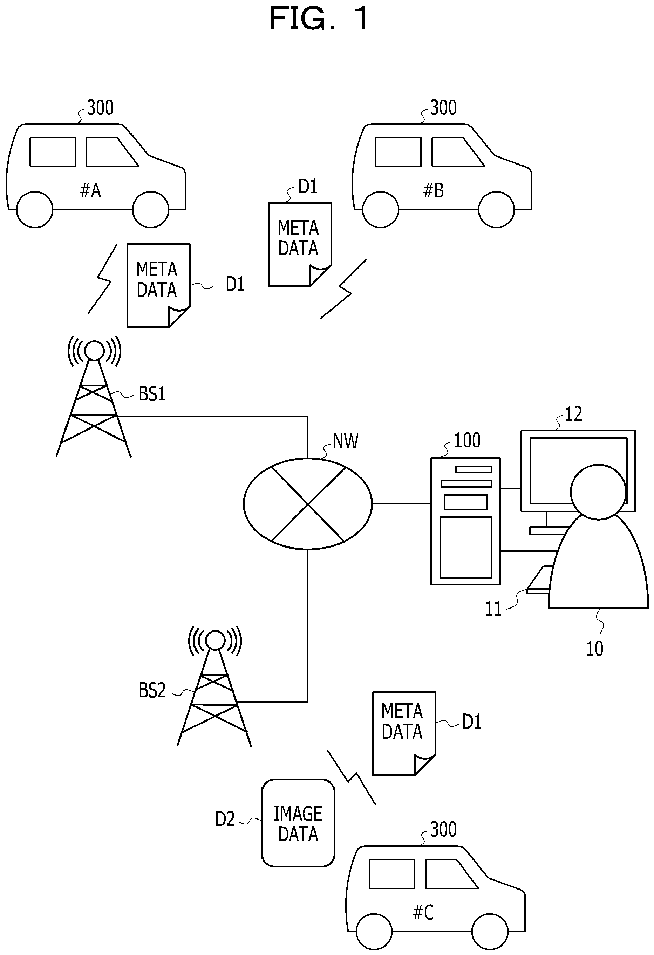

First, an outline of a collection server 100 that executes a method of collecting data is described with reference to FIG. 1. The collection server 100 is coupled to base stations BS1, BS2 via a communication network NW. The communication network NW includes, for example, at least one of a local area network (LAN) and the Internet. The LAN may be a wired LAN or a wireless LAN. The base stations BS1, BS2 are coupled to a plurality of vehicles 300 via wireless communication. For example, wide-area wireless communication such as long term evolution (LTE) may be used for the wireless communication. Thus, the collection server 100 is coupled to the plurality of vehicles 300 via wired communication and wireless communication. Although the vehicles 300 are each indicated as an example of a moving object in FIG. 1, the moving object may be a mobile terminal such as a smart device (for example, a smartphone, a tablet terminal, or the like) instead of a vehicle 300.

Each of the vehicles 300 periodically transmits metadata D1 to the collection server 100. The metadata D1 is data for explaining image data D2 of an image captured by a camera (not illustrated) installed in the vehicle 300. The metadata D1 is associated with the image data D2. The metadata D1 includes a vehicle identifier (ID) for identifying the vehicle 300, positional information of the vehicle 300, the time when the image is obtained, controller area network (CAN) bus information, and so forth. The CAN bus information is information that flows through a bus of an onboard network called the CAN (CAN bus) and is, for example, detected by various sensors (for example, onboard sensors) such as an acceleration sensor and a vehicle speed sensor. The image may be a still image or a moving image in which still images continue in time series. A moving image may also be referred to as, for example, a video.

The collection server 100 collects and stores various pieces of the metadata D1 periodically transmitted from each of the vehicles 300. When a user 10 operates an input device 11 to input predetermined conditions, the collection server 100 determines whether there is a specific piece of metadata D1 that satisfies the predetermined conditions among the various pieces of metadata D1. When the collection server 100 finds the specific piece of metadata D1, the collection server 100 identifies the vehicle 300 from which the identified piece of metadata D1 is collected and makes a request, to the identified vehicle 300, of transmission of a specific piece of image data D2 associated with the specific piece of metadata D1.

Thus, the vehicle 300 identified by the collection server 100 transmits to the collection server 100 the piece of image data D2 that the vehicle itself holds. When the piece of image data D2 is transmitted from the vehicle 300, the collection server 100 collects and stores the piece of image data D2 transmitted from the vehicle 300. The user 10 is able to check the image of the piece of image data D2 via a display device 12 by operating the input device 11 to access the collection server 100.

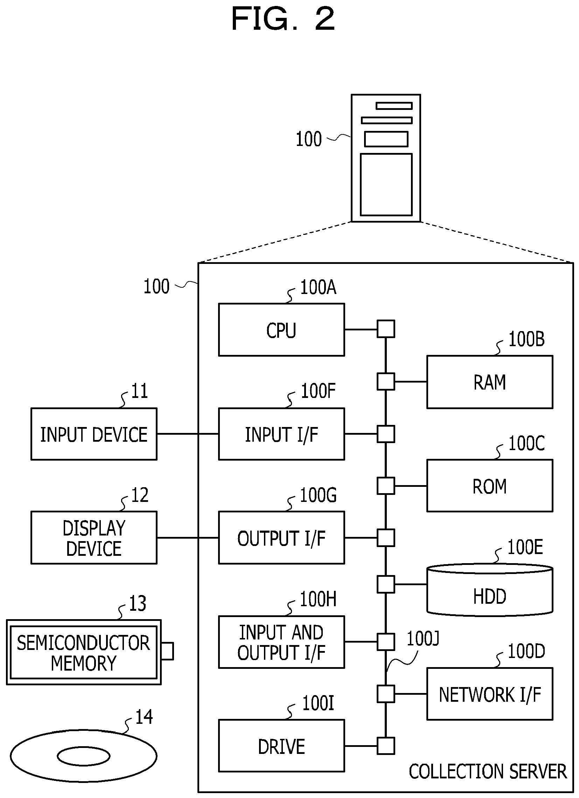

With reference to FIG. 2, a hardware configuration of the collection server 100 is described.

The collection server 100 includes, as a processor, a central processing unit (CPU) 100A and, as memory, a random-access memory (RAM) 100B and a read-only memory (ROM) 100C. The collection server 100 also includes a network interface (I/F) 100D and a hard disk drive (HDD) 100E. A solid-state drive (SSD) may be used instead of the HDD 100E.

The collection server 100 may include, as desired, at least one of an input I/F 100F, an output I/F 100G, an input and output I/F 100H, and a drive device 100I. The elements from the CPU 100A to the drive device 100I are coupled to each other via an internal bus 100J. For example, the collection server 100 may be realized by a computer.

The input device 11 is coupled to the input I/F 100F. Examples of the input device 11 include, for example, a keyboard, a mouse, a touch pad, and the like. The display device 12 is coupled to the output I/F 100G. Examples of the display device 12 include, for example, a liquid crystal display and the like. A semiconductor memory 13 is coupled to the input and output I/F 100H. Examples of the semiconductor memory 13 include, for example, a Universal Serial Bus (USB) memory, a flash memory, and the like. The input and output I/F 100H reads a data collection program stored in the semiconductor memory 13. The input I/F 100F and the input and output I/F 100H include, for example, a USB port. The output I/F 100G includes, for example, a display port.

A portable recording medium 14 is inserted into the drive device 100I. Examples of the portable recording medium 14 include, for example, a removable disc such as a compact disc (CD)-ROM and a Digital Versatile Disc (DVD). The drive device 100I reads the data collection program recorded in the portable recording medium 14. The network I/F 100D includes, for example, a LAN port, a communication circuit, and the like.

The data collection program stored in at least one of the ROM 100C, the HDD 100E, and the semiconductor memory 13 is temporarily stored in the RAM 100B by the CPU 100A. The data collection program recorded in the portable recording medium 14 is temporarily stored in the RAM 100B by the CPU 100A. When the stored data collection program is executed by the CPU 100A, the CPU 100A realizes various types of functions to be described later and executes various types of processes to be described later. The data collection program may be configured to perform processing of a flowchart to be described later.

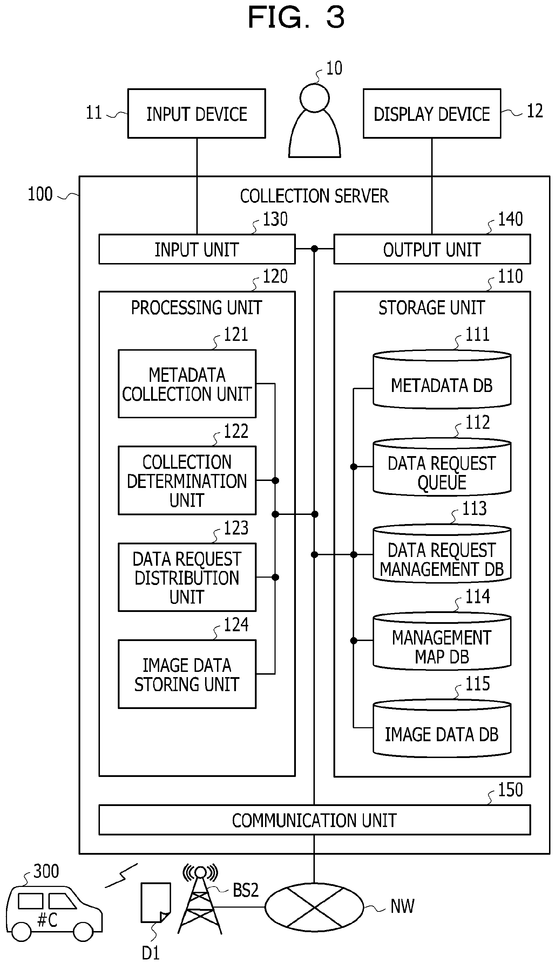

A functional configuration of the collection server 100 according to a first embodiment is described with reference to FIG. 3. FIG. 3 illustrates main functional parts of the collection server 100.

As illustrated in FIG. 3, the collection server 100 includes a storage unit 110, a processing unit 120, an input unit 130, an output unit 140, and a communication unit 150. The storage unit 110 may be realized by, for example, the RAM 100B or the HDD 100E described above. The processing unit 120 may be realized by the CPU 100A described above. The input unit 130 may be realized by the input I/F 100F described above. The output unit 140 may be realized by the output I/F 100G described above. The communication unit 150 may be realized by the network I/F 100D described above. Accordingly, the storage unit 110, the processing unit 120, the input unit 130, the output unit 140, and the communication unit 150 are coupled to each other.

The storage unit 110 includes, as elements thereof, a metadata database (DB) 111, a data request queue 112, a data request management DB 113, a management map DB 114, and an image data DB 115. At least one of the elements of the storage unit 110 may be distributed to and provided in another server (not illustrated) different from the collection server 100.

The processing unit 120 includes, as elements thereof, a metadata collection unit 121, a collection determination unit 122, a data request distribution unit 123, and an image data storing unit 124. At least one of the elements of the processing unit 120 selectively accesses an element of the storage unit 110 to execute various types of processes. For example, the metadata collection unit 121 collects the metadata D1 transmitted from the vehicle 300 via the communication unit 150 and stores the collected metadata D1 in the metadata DB 111. In this way, the metadata DB 111 stores the metadata D1. The other elements will be described in detail in the description of operations of the collection server 100.

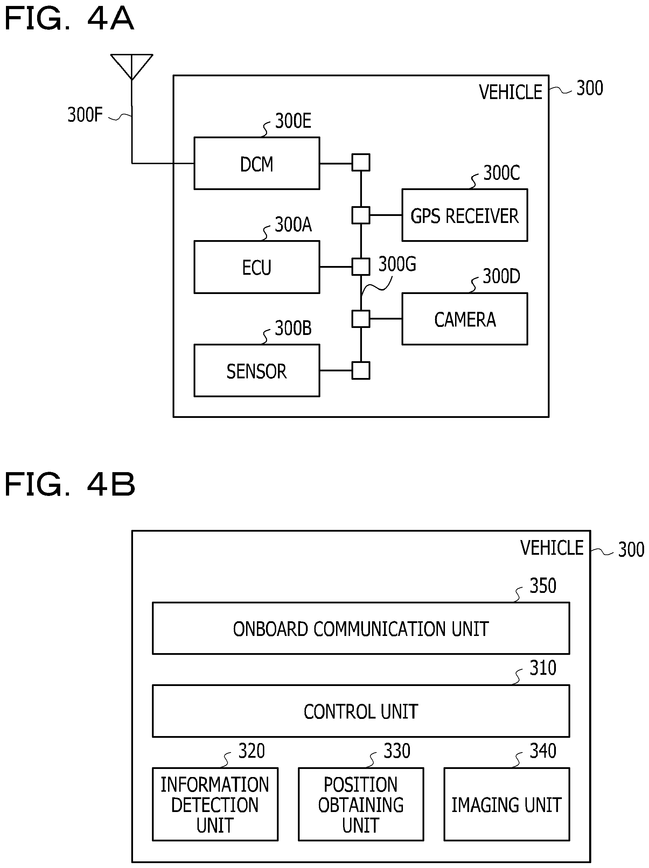

A hardware configuration and a functional configuration of the vehicle 300 is described with reference to FIGs. 4A and 4B. FIG. 4B illustrates a main functional parts of the vehicle 300.

As illustrated in FIG. 4A, the vehicle 300 includes an electronic control unit (ECU) 300A. The ECU 300A includes, for example, a CPU, a RAM, a ROM, and an input and output interface. The vehicle 300 also includes a sensor 300B and a global positioning system (GPS) receiver 300C. The vehicle 300 also includes a camera 300D and a data communication module (DCM) 300E. An antenna 300F is coupled to the DCM 300E. The elements from the ECU 300A to the DCM 300E are coupled to each other via a CAN bus 300G. The vehicle ID of the vehicle 300 is assigned to the ECU300A or the DCM300E.

As illustrated in FIG. 4B, the vehicle 300 includes a control unit 310, an information detection unit 320, a position obtaining unit 330, an imaging unit 340, and an onboard communication unit 350. The control unit 310 may be realized by the ECU 300A described above. The information detection unit 320 may be realized by the sensor 300B described above. The position obtaining unit 330 may be realized by the GPS receiver 300C described above. The imaging unit 340 may be realized by the camera 300D described above. The onboard communication unit 350 may be realized by the DCM 300E and the antenna 300F described above. Accordingly, the control unit 310, the information detection unit 320, the position obtaining unit 330, the imaging unit 340, and the onboard communication unit 350 are coupled to each other.

The information detection unit 320 detects various types of information such as the speed and the acceleration of the vehicle 300 and outputs the detected information as the CAN bus information to the CAN bus 300G. The position obtaining unit 330 obtains positional information of the vehicle 300 based on GPS function. The positional information may be information on a running position of the vehicle 300 or information on a stop position of the vehicle 300. The imaging unit 340 captures an image within the predetermined field angle range in front of the vehicle 300 and generates and holds the image data D2 of the image within the predetermined field angle range. The onboard communication unit 350 receives a data request to be described later and transmits the metadata D1 and the image data D2.

The control unit 310 controls operations of the entirety of the vehicle 300 including the information detection unit 320, the position obtaining unit 330, the imaging unit 340, and the onboard communication unit 350. For example, the control unit 310 obtains the image data D2 generated and held by the imaging unit 340 and associates the image data D2 with, for example, the vehicle ID, the positional information, the CAN bus information, and the time when the image data D2 is obtained as the metadata D1 and holds the image data D2. Instead of the time when the image data D2 is obtained, the time when the imaging unit 340 captures the image may be used. The control unit 310 periodically transmits the metadata D1 via the onboard communication unit 350. Upon receiving the data request via the onboard communication unit 350, the control unit 310 transmits the image data D2 corresponding to the data request via the onboard communication unit 350.

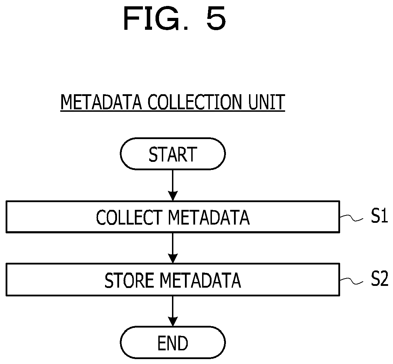

Next, the operations of the collection server 100 are described with reference to FIGs. 5 to 14B.

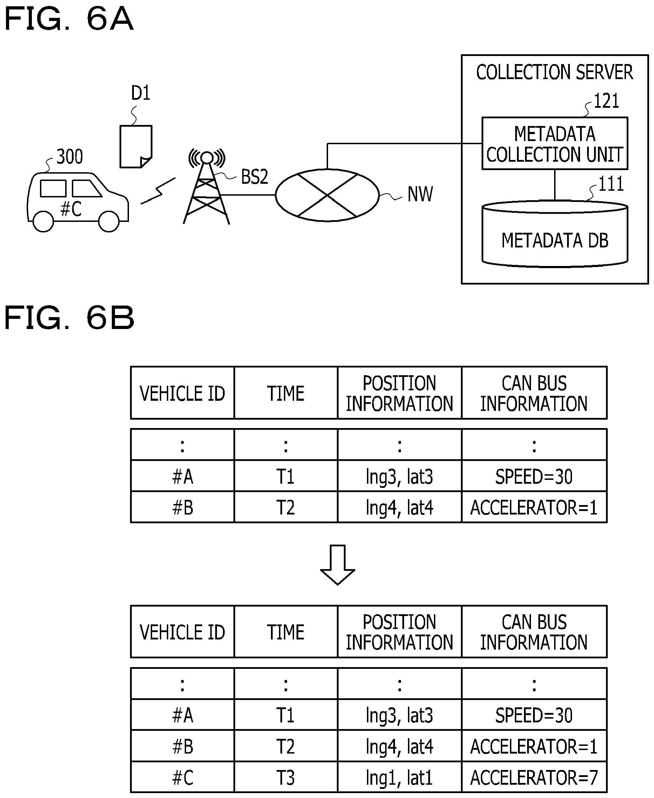

First, operations of the metadata collection unit 121 are described with reference to FIGs. 5, 6A, and 6B. As illustrated in FIGs. 5 and 6A, when the metadata D1 is transmitted from the vehicle 300, the metadata collection unit 121 collects the metadata D1 by receiving the metadata D1 (step S1). Upon receiving the metadata D1, the metadata collection unit 121 stores the metadata D1 in the metadata DB 111 (step S2).

Thus, for example, when a piece of metadata D1 including the vehicle ID "#A", a piece of metadata D1 including the vehicle ID "#B", and the like are stored in the metadata DB 111 as illustrated in the upper part of FIG. 6B, in the case where a piece of metadata D1 is transmitted from the vehicle 300 having the vehicle ID "#C", the piece of metadata D1 including the vehicle ID "#C" is added to and stored in the metadata DB 111 as illustrated in the lower part of FIG. 6B.

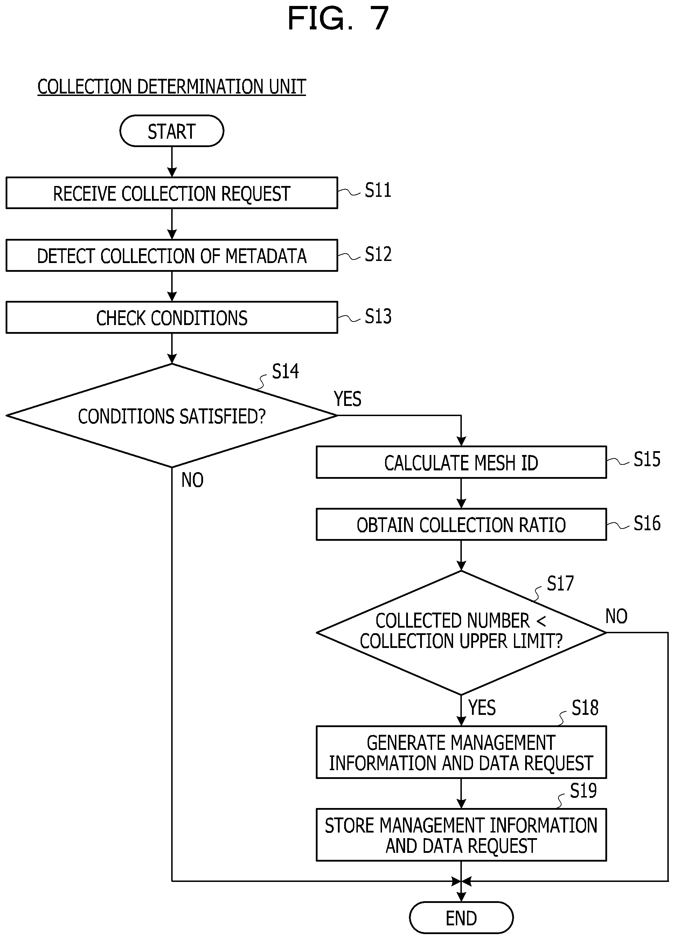

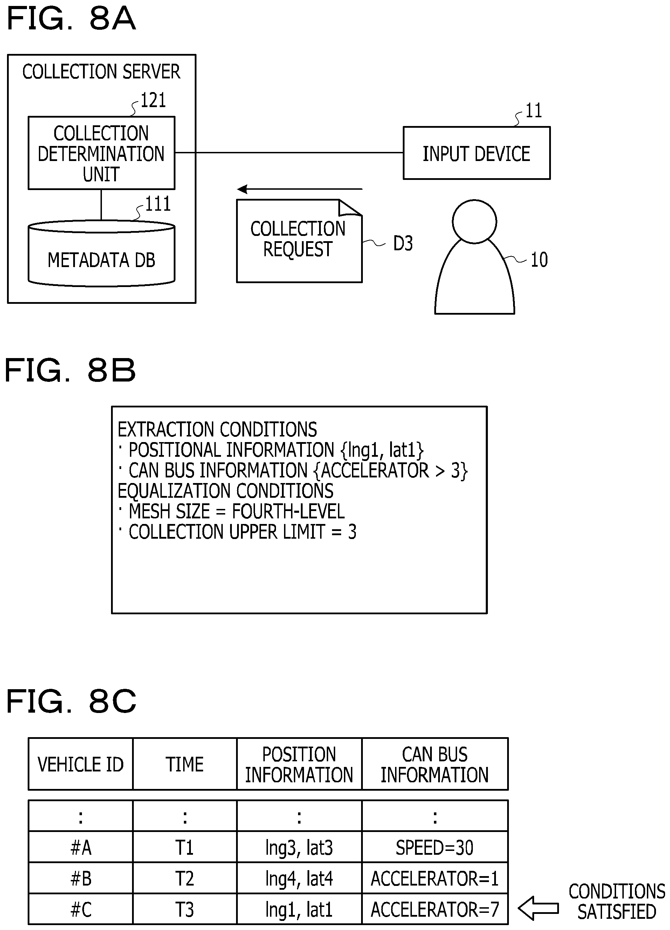

Next, operations of the collection determination unit 122 according to the first embodiment are described with reference to FIGs. 7 to 11. First, as illustrated in FIGs. 7 and 8A, the collection determination unit 122 receives a collection request D3 input to the input device 11 by an operation of the user 10 (step S11). Upon receiving the collection request D3, the collection determination unit 122 holds the collection request D3 and waits. As illustrated in FIG. 8B, the collection request D3 includes extraction conditions and equalization conditions.

The extraction conditions are conditions related to the positional information and the CAN bus information when a specific piece of metadata D1 is found and extracted from the various pieces of metadata D1 stored in the metadata DB 111. A piece of image data D2 associated with the piece of metadata D1 extracted according to the extraction conditions is to be collected by the collection server 100. Accordingly, the extraction conditions may also be referred to as the collection conditions of the image data D2.

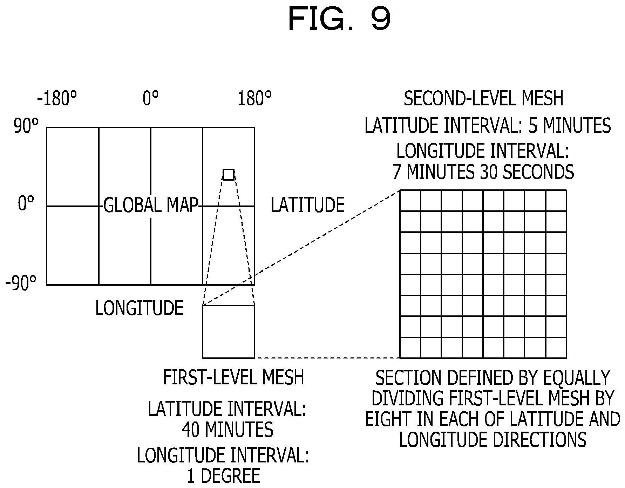

The equalization conditions include a mesh size and a collection upper limit. The mesh size is the level that defines the granularity of a mesh (grid). For example, as illustrated in FIG. 9, when a global map is divided into eight regions by latitude and longitude, the mesh size may be defined from a first-level mesh to a sixth-level mesh for each of the eight regions. The first-level mesh has a latitude interval of 40 minutes and a longitude interval of 1 degree. The second-level mesh is a mesh region defined by equally dividing the first-level mesh by eight in each of the latitude direction and the longitude direction. The second-level mesh has a latitude interval of 5 minutes and a longitude interval of 7 minutes and 30 seconds.

Although it is not illustrated, the third-level mesh is a mesh region defined by equally dividing the second-level mesh by ten in each of the latitude direction and the longitude direction. The third-level mesh has a latitude interval of 30 seconds and a longitude interval of 45 seconds. The fourth-level mesh is a mesh region defined by equally dividing the third-level mesh by two in each of the latitude direction and the longitude direction. The fourth-level mesh has a latitude interval of 15 seconds and a longitude interval of 22.5 seconds. Although description of the fifth-level mesh and the sixth-level mesh is omitted, these meshes may be viewed in a predetermined web page the uniform resource locator (URL) of which is https://www.fttsus.jp/worldgrids/ja/top-ja/. According to the present embodiment, a fourth-level mesh defined as follows is described as an example: the third-level mesh is equally divided by three in each of the latitude direction and the longitude direction to have nine mesh regions having a latitude interval of 10 seconds and a longitude interval of 15 seconds. The collection upper limit included in the equalization conditions represents an upper limit number when pieces of image data D2 are collected. The collection determination unit 122 generates a management map in accordance with the mesh size, sets the collection upper limit of the pieces of image data D2 for individual sections (hereafter, referred to as mesh regions), and stores the collection upper limit in the management map DB 114.

As illustrated in FIG. 7, upon detecting collection of a piece of metadata D1 (step S12), the collection determination unit 122 checks the conditions (step S13) and determines whether the conditions are satisfied (step S14). In more detail, as illustrated in FIG. 8A, the collection determination unit 122 monitors the metadata DB 111 and, when determining that a new piece of metadata D1 is added to and stored in the metadata DB 111, the collection determination unit 122 detects the collection of the piece of metadata D1. Thus, the collection determination unit 122 checks the extraction conditions of the collection request D3 held by the collection determination unit 122 itself with the entirety or part of the piece of metadata D1 to determine whether the conditions are satisfied.

When the collection determination unit 122 determines that the conditions are not satisfied (step S14: NO), the processing ends. In contrast, when the collection determination unit 122 determines that the conditions are satisfied (step S14: YES), the collection determination unit 122 calculates the mesh ID (step S15). According to the present embodiment, as illustrated in FIG. 8C, the metadata DB 111 stores the piece of metadata D1 of the vehicle ID "#C" that satisfies the extraction conditions. Thus, the collection determination unit 122 determines that the conditions are satisfied. Accordingly, the collection determination unit 122 calculates the mesh ID. Although the details will be described later, the mesh ID is an identifier that identifies the mesh regions included in the management map. The mesh ID may be calculated by using the latitude, the longitude, and a predetermined function: mesh ID = f(longitude, latitude) for calculating the mesh ID from a combination of the latitude and the longitude. The details of the technique of calculating the mesh ID may be viewed in a predetermined web page the URL of which is https://www.fttsus.jp/worldgrids/ja/document-ja/. For example, according to the present embodiment, the collection determination unit 122 calculates the mesh ID "#5" from the positional information (Ing1, Int1) designated by the extraction conditions of the collection request D3.

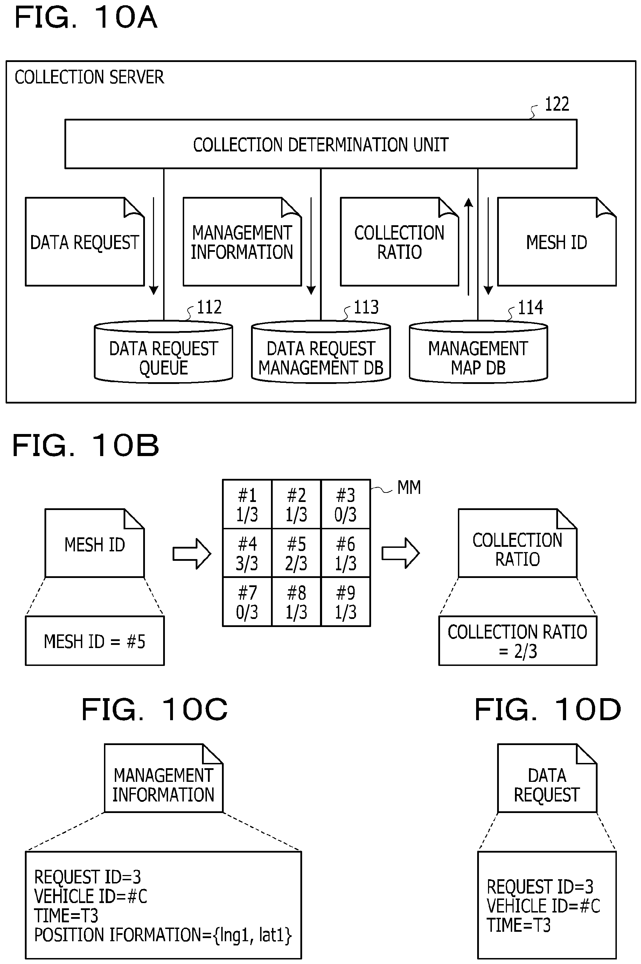

When the mesh ID is calculated, the collection determination unit 122 obtains a collection ratio (step S16). As described above, when the mesh ID "#5" is calculated, as illustrated in FIGs. 10A and 10B, the collection determination unit 122 refers to a management map MM of the fourth-level mesh which is stored in a management map DB 114 and for which the collection upper limit "3" is set, and the collection determination unit 122 obtains the collection ratio "2/3" corresponding to the mesh ID "#5". The numerator of the collection ratio "2/3" represents a collected number up to this point in time (present collected number), and the denominator of the collection ratio "2/3" represents the collection upper limit designated by the equalization conditions. The collection upper limit corresponds to information for making the collected numbers close to be an equalized value.

After obtaining the collection ratio, the collection determination unit 122 next determines whether the collection ratio is less than the collection upper limit (step S17). When the collection ratio is not less than the collection upper limit (step S17: NO), the collection determination unit 122 ends the processing. In contrast, when the collection ratio is less than the collection upper limit (step S17: YES), the collection determination unit 122 generates management information and a data request (step S18). For example, the collection determination unit 122 issues a request ID to identify the data request, and as illustrated in FIG. 10C, generates the management information including the issued request ID and the vehicle ID, the time, and the positional information of the extracted piece of metadata D1. As illustrated in FIG. 10D, the collection determination unit 122 generates the data request including the issued request ID and the vehicle ID and the time of the extracted piece of metadata D1. As described above, the collection determination unit 122 determines whether to generate the data request to request transmission of a specific piece of image data D2 associated with the extracted piece of metadata D1 depending on whether the collected number is less than the collection upper limit.

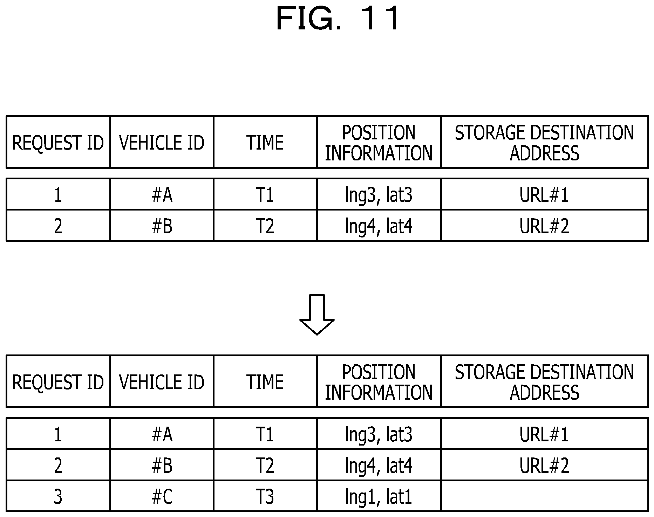

When the collection determination unit 122 generates the data request and the management information, the collection determination unit 122 stores the management information and the data request (step S19) and ends the processing. For example, as illustrated in FIG. 10A, the collection determination unit 122 stores the management information in the data request management DB 113. Thus, when the management information including the vehicle ID "#A" and the management information including the vehicle ID "#B" are stored in the data request management DB 113 as illustrated in the upper part of FIG. 11, the management information including the vehicle ID "#C" is added to and stored in the data-request management DB 113 as illustrated in the lower part of FIG. 11. The collection determination unit 122 stores the data request in the data request queue 112. Thus, the data request waits in the data request queue 112 until the data request is obtained by the data request distribution unit 123.

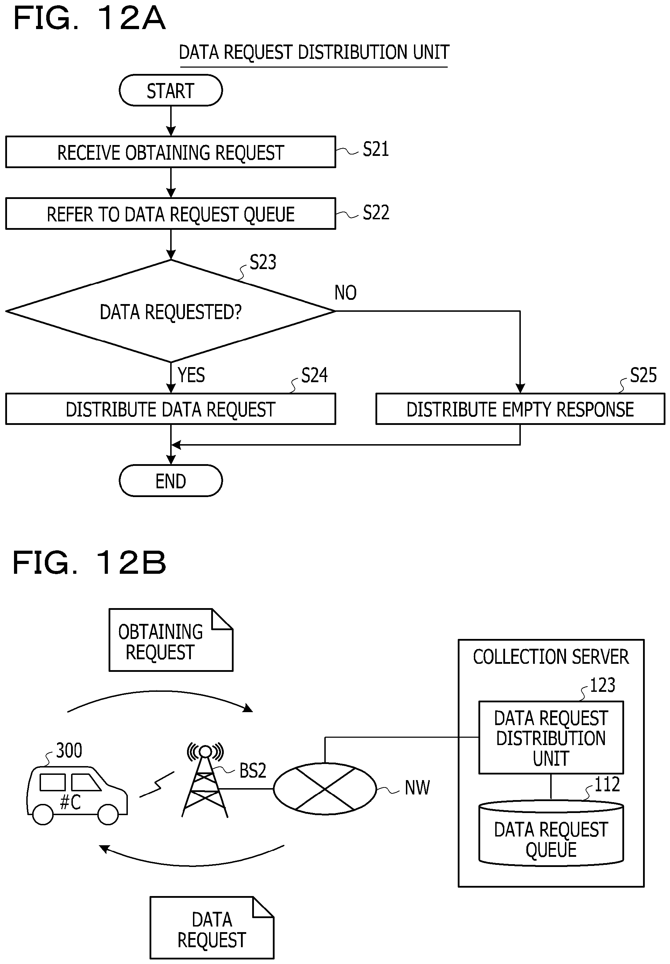

Next, operations of the data request distribution unit 123 are described with reference to FIGs. 12A and 12B. First, as illustrated in FIG. 12A, the data request distribution unit 123 receives an obtaining request (step S21). For example, as illustrated in FIG. 12B, the obtaining request transmitted from the vehicle 300 with the vehicle ID "#C" is received. The obtaining request includes the vehicle ID of "#C". The data request distribution unit 123 receives obtaining requests transmitted from the vehicle 300 with the vehicle ID "#A" and the vehicle 300 with the vehicle ID "#B" other than the vehicle 300 with the vehicle ID "#C". These obtaining requests also include the vehicle ID "#A" or the vehicle ID "#B" corresponding to the source vehicle 300.

Upon receiving the obtaining request, the data request distribution unit 123 subsequently refers to the data request queue 112 (step S22) and determines whether there is a data request (step S23). In more detail, the data request distribution unit 123 refers to the data request queue 112 based on the vehicle ID "#C" included in the obtaining request and determines whether there is a data request including the vehicle ID "#C".

When there is the data request (step S23: YES), the data request distribution unit 123 obtains and distributes the data request (step S24) and ends the processing. According to the present embodiment, as described above, the data request queue 112 stores the data request for the vehicle ID "#C" (see FIG. 10D). Thus, the data request distribution unit 123 determines that there is the data request and distributes, as illustrated in FIG. 12B, the data request to the vehicle 300 with the vehicle ID "#C" that is the transmission source of the obtaining request. When there is no data request (NO in step S23), the data request distribution unit 123 distributes an empty response to the vehicle 300 with the vehicle ID "#C" that is the source of the obtaining request (step S25) and ends the processing.

In the vehicle 300 with the vehicle ID "#C", different processes are executed depending on whether the vehicle 300 receives the data request or the empty response. When the onboard communication unit 350 receives the data request, the control unit 310 identifies the piece of image data D2 with which the time included in the data request is associated as the metadata D1. When the control unit 310 identifies the piece of image data D2, the onboard communication unit 350 associates the identified piece of image data D2 with the request ID "3" (see FIG. 10D) included in the data request and transmits the identified piece of image data D2 to the collection server 100. In contrast, when the onboard communication unit 350 receives the empty response, the control unit 310 does not execute the processing or the control unit 310 executes a predetermined process corresponding to the empty response by which no image data D2 is transmitted.

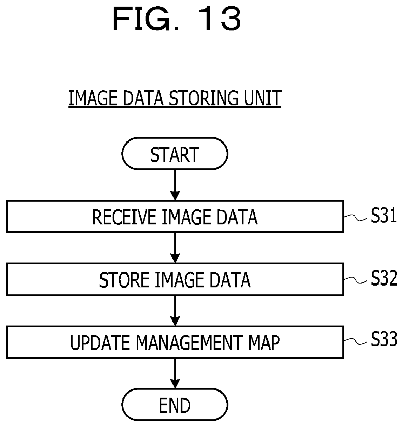

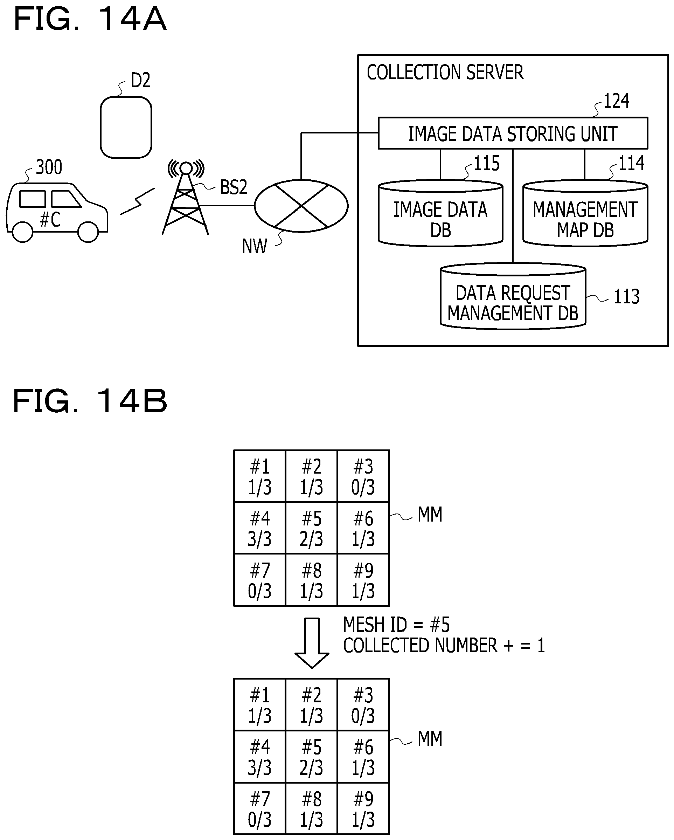

Next, operations of the image data storing unit 124 are described with reference to FIGs. 13, 14A and 14B. First, as illustrated in FIGs. 13 and 14A, the image data storing unit 124 receives the piece of image data D2 (step S31). As described above, the piece of image data D2 is associated with the request ID "3" and transmitted from the vehicle 300 with the vehicle ID "#C". The image data storing unit 124 receives the piece of image data D2 transmitted from the vehicle 300 with the vehicle ID "#C" together with the request ID "3".

Upon receiving the piece of image data D2, as illustrated in FIGs. 13 and 14A, the image data storing unit 124 stores the piece of image data D2 in the image data DB 115 (step S32). When the image data storing unit 124 stores the piece of image data D2 in the image data DB 115, the image data storing unit 124 issues a storage destination address of the piece of image data D2 in the image data DB 115. According to the present embodiment, the image data storing unit 124 issues an address "URL#3" as the storage destination address. For example, the piece of image data D2 is stored in a storing region of the address "URL #3" in the image data DB 115.

When the piece of image data D2 is stored, as illustrated in FIGs. 13 and 14B, the image data storing unit 124 updates the management map MM (step S33). In more detail, based on the request ID "3" associated with the piece of image data D2, the image data storing unit 124 searches for the management information including the same request ID "3" from the data request management DB 113. As described above, the management information including the request ID "3" is stored in the data request management DB 113 (see FIG. 11). Thus, the image data storing unit 124 registers the issued storage destination address in a storage region for the storage destination address in the management information including the request ID "3". In this way, the address "URL#3" is registered in this storage region.

The image data storing unit 124 obtains the positional information from the management information including the request ID "3" before or after the registration of the address. According to the present embodiment, the image data storing unit 124 obtains the positional information (Ing1, Intl) (see FIG. 11). When the image data storing unit 124 obtains the positional information, the image data storing unit 124 calculates the mesh ID from the obtained positional information. According to the present embodiment, similarly to the process in step S15, the image data storing unit 124 calculates the mesh ID "#5". When the image data storing unit 124 calculates the mesh ID, as illustrated in FIG. 14B, the image data storing unit 124 increments by one the collected number of the collection ratio in the mesh region corresponding to the mesh ID. According to the present embodiment, the image data storing unit 124 increments the collected number "2" of the collection ratio "2/3" in the mesh region of the mesh ID "#5" to the collected number "3".

Thus, the collected number "3" reaches the collection upper limit, and thereafter, the piece of image data D2 corresponding to the mesh region of the mesh ID "#5" is not requested. Accordingly, when the above-described processing is similarly executed for the mesh regions other than the mesh ID "#5", all the mesh regions converge to the collection ratio "3/3". Thus, the collected numbers of pieces of the image data D2 are made to be an equalized value without the occurrences of variation of the collection of the pieces of image data D2. Also, since the collection of the image data D2 is stopped by the collection upper limit, the collection efficiency of the image data D2 is improved. When the user 10 operates the input device 11 to access the image data DB 115, the user 10 may view the image data D2 by causing the display device 12 to display the image data D2.

### (Second Embodiment)

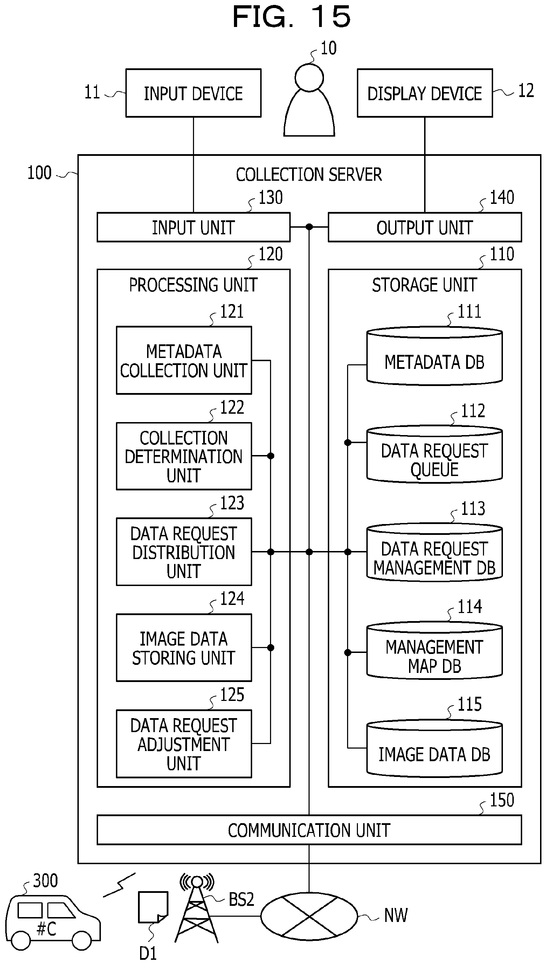

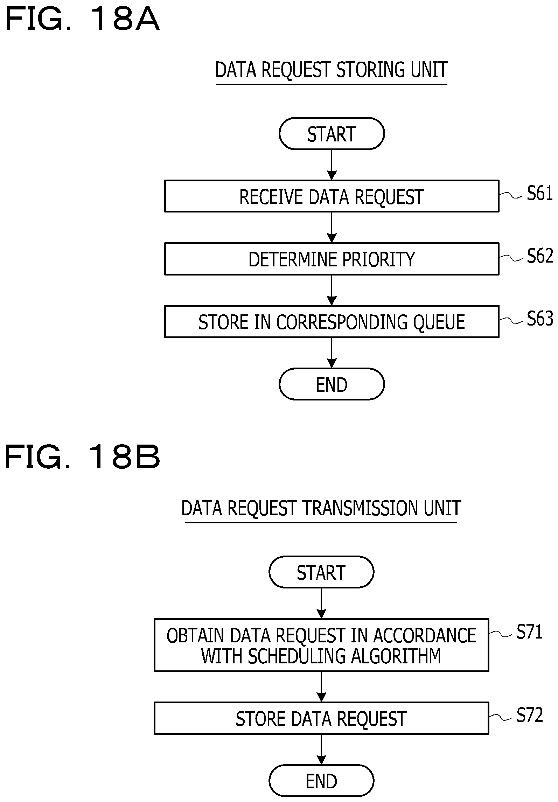

Referring next to FIGs. 15 to 18B, a second embodiment of the present disclosure is described. First, a functional configuration of the collection server 100 according to the second embodiment is described with reference to FIG. 15. The same elements as those of the collection server 100 according to the first embodiment are denoted by the same reference signs, and detailed description thereof is omitted.

As illustrated in FIG. 15, the collection server 100 according to the second embodiment is different from that of the first embodiment in that the processing unit 120 of the collection server 100 according to the second embodiment includes a data request adjustment unit 125 as an element. Although the details will be described later, the data request adjustment unit 125 adjusts order of the distribution of the data requests generated by the collection determination unit 122 based on the information for making the collected numbers of the pieces of image data D2 close to be an equalized value. For example, based on the information including the priority for collecting the pieces of image data D2, the data request adjustment unit 125 delays the distribution of the data request when the priority is relatively low. This may make the collected numbers of the pieces of the image data D2 close to be an equalized value.

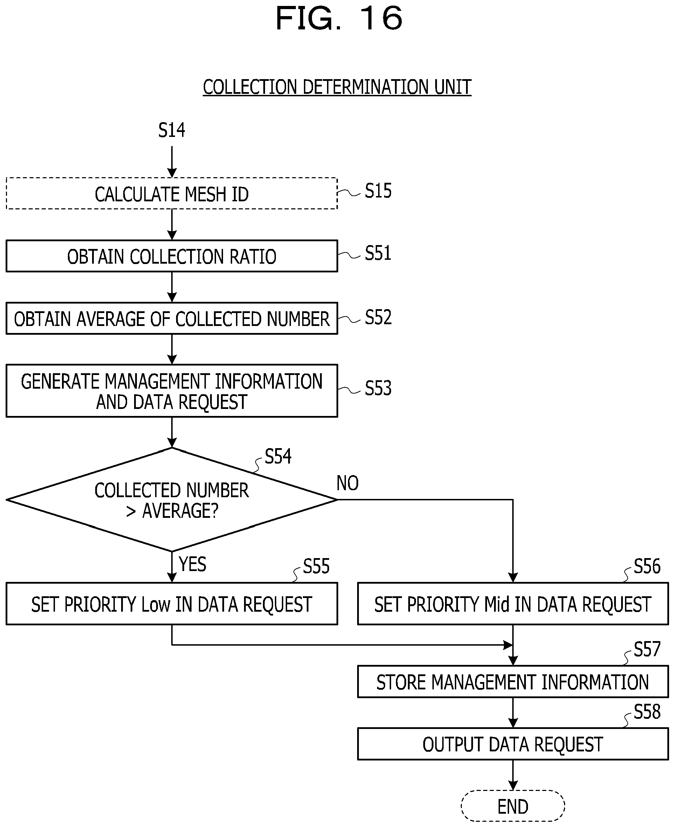

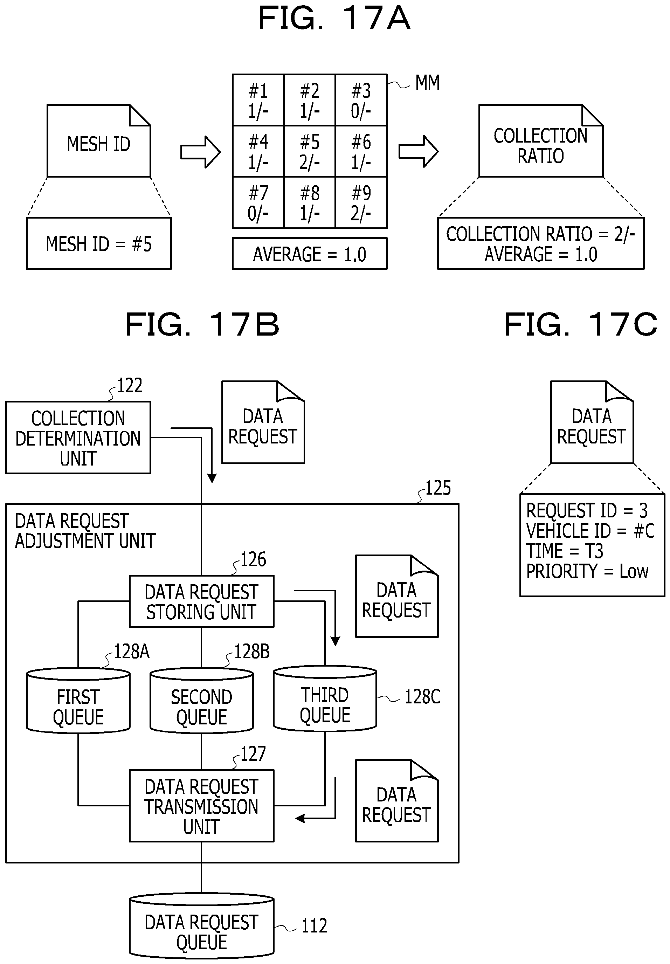

Next, operations of the collection determination unit 122 according to the second embodiment are described with reference to FIGs. 16, 17A and 17B. First, as illustrated in FIGs. 16 and 17A, when the mesh ID is calculated in the process in step S15, the collection determination unit 122 obtains the collection ratio (step S51) and further obtains an average of the collected numbers (step S52). As described above, when the mesh ID "#5" is calculated, as illustrated in FIG. 17A, the collection determination unit 122 refers to the management map MM of the fourth-level mesh which is stored in the management map DB 114 and for which the collection upper limit is not set, and the collection determination unit 122 obtains the collection ratio "2/-" corresponding to the mesh ID "#5". The numerator of the collection ratio "2/-" represents the collected number up to this point in time (present collected number), and the denominator of the collection ratio "2/-" represents that the collection upper limit is not designated by the equalization condition. The average of the collected numbers is calculated based on the total sum of the collected numbers and the number of mesh regions of the management map MM and is associated with the management map MM. According to the present embodiment, the total sum of the collected numbers is "9" and the number of mesh regions is "9". Thus, an average "1.0" is calculated and associated with the management map MM. The collection determination unit 122 obtains the average "1.0" together with the collection ratio "2/-".

When the collection determination unit 122 obtains the average of the collected numbers, the collection determination unit 122 next generates the management information and the data request (step S53). In the process in step S53, the collection determination unit 122 generates the management information and the data request in a similar manner to that in step S18. Thus, the management information and the data request described with reference to FIGs. 10C and 10D are generated.

When the collection determination unit 122 generates the management information and the data request, the collection determination unit 122 next determines whether the collected number is greater than the average (step S54). For example, the collection determination unit 122 determines whether the collected number of the pieces of image data D2 corresponding to the target mesh ID is greater than the collected numbers of the pieces of image data D2 corresponding to the mesh IDs other than the target mesh ID.

When the collected number is greater than the average (YES in step S54), as illustrated in FIG. 17C, the collection determination unit 122 sets a priority Low in the data request (step S55). The priority Low is information for delaying the distribution of the data request relative to the other data requests in the distribution order. For example, when the collected number of the pieces of image data D2 corresponding to the target mesh ID is relatively greater, an increase in the collected number cause variation of the collection. Thus, collection of the image data D2 is restrained. According to the present embodiment, the collected number of the mesh region with the mesh ID "#5" is "2" and greater than the average "1.0". Thus, the priority Low is set in the data request.

In contrast, when the collected number is smaller than or equal to the average (NO in step S54), although it is not illustrated, the collection determination unit 122 sets a priority Mid in the data request (step S56). The priority Mid is information for not adjusting the distribution order of the data requests. For example, when the collected number of the pieces of image data D2 corresponding to the target mesh ID is relatively smaller, collection of the image data D2 is enhanced so as to make the collected numbers of pieces of the image data D2 close to be an equalized value. When the collected number is 0 (zero), the collection determination unit 122 may set a priority High in the data request.

When the collection determination unit 122 sets the priority Low or Mid in the data request, the collection determination unit 122 next stores the management information generated in the process in Step S53 (Step S57). For example, similarly to the first embodiment, the collection determination unit 122 stores the management information in the data request management DB 113. When the collection determination unit 122 stores the management information, as illustrated in FIG. 17B, the collection determination unit 122 outputs the data request to the data request adjustment unit 125 (step S58) and ends the processing.

As illustrated in FIG. 17B, the data request adjustment unit 125 includes a data request storing unit 126, a data request transmission unit 127, a first queue 128A, a second queue 128B, and a third queue 128C. The first queue 128A, the second queue 128B, and the third queue 128C may be included in the storage unit 110. The details of the data request storing unit 126, the data request transmission unit 127, the first queue 128A, the second queue 128B, and the third queue 128C will be described later.

Next, operations of the data request adjustment unit 125 are described with reference to FIGs. 18A and 18B. As described above, when the collection determination unit 122 outputs the data request, as illustrated in FIG. 18A, the data request storing unit 126 receives the data request (in step S61). Upon receiving the data request, the data request storing unit 126 determines the priority (step S62). As described above, any one of the priorities Low, Mid, and High is set in the data request.

When the data request storing unit 126 determines the priority, the data request storing unit 126 stores the data request in the corresponding queue (step S63) and ends the processing. For example, when it is determined that the priority Low is set in the data request, the data request storing unit 126 stores the data request in the third queue 128C as illustrated in FIG. 17B. Although it is not illustrated, when it is determined that the priority Mid is set in the data request, the data request storing unit 126 stores the data request in the second queue 128B. When it is determined that the priority High is set in the data request, the data request storing unit 126 stores the data request in the first queue 128A.

When the data request storing unit 126 stores the data request, as illustrated in FIGs. 17B and 18B, the data request transmission unit 127 obtains the data request in accordance with a scheduling algorithm (step S71). Examples of the scheduling algorithm include, for example, priority scheduling and weighted fair queuing (WFQ). The data request transmission unit 127 obtains the data request in accordance with the scheduling algorithm. Accordingly, when a case where the data request is obtained from the second queue 128B is set as a reference, the data request transmission unit 127 obtains the data request from the third queue 128C at a lower frequency than that of the reference. The data request transmission unit 127 obtains the data request from the first queue 128A at a higher frequency than that of the reference. Thus, when the data request is stored in the third queue 128C, an obtaining frequency of the data request transmission unit 127 decreases. For example, when the priority Low is set in the data request, the obtaining frequency of the data request transmission unit 127 decreases.

Upon receiving the data request, as illustrated in FIG. 17B, the data request transmission unit 127 stores the data request in the data request queue 112 (in step S72). Thus, the data request distribution unit 123 may obtain and distribute the data requests stored in the data request queue 112. When the priority Low is set in the data request, the distribution of the data request is delayed compared to the case where the priority Mid is set in the data request. This may delay the collection of the image data D2 from the vehicle 300 and consequently make the collected numbers of pieces of the image data D2 close to be an equalized value.

Although the preferred embodiments according to the present disclosure have been described in detail above, the embodiment is not limited to the specific embodiments related to the present disclosure, and various modifications and changes may be made without departing from the gist of the present disclosure described in the claims.

For example, according to the embodiments described above, it has been described that the collection determination unit 122 receives and holds the collection request D3 input by the user 10 in advance and checks the extraction conditions of the collection request D3 against the metadata D1 every time the metadata D1 is collected. In contrast, the metadata D1 may be periodically collected and stored and the extraction conditions of the collection request D3 may be checked against the metadata D1 when the collection determination unit 122 receives and holds the collection request D3 input by the user 10 afterward.

Although the management map corresponding to the positional information is used according to the above-described embodiment, a management map corresponding to time or the vehicle ID may be used. This may suppress a situation, in which, for example, images are concentratedly collected for a specific one minute even when the user 10 wants to view a change over time at predetermined intervals before and after an accident, and collection of the image data D2 may be made to be equalized.

## Claims

1. A computer-implemented method of collecting data, the method comprising:
collecting pieces of metadata associated with pieces of image data from a plurality of moving objects that hold the pieces of image data; and
determining, when a specific piece of metadata that satisfies a condition is found in the collected pieces of metadata, based on information for making collected numbers of the pieces of image data close to be an equalized value and a map that manages the collected numbers in a mesh shape, whether to request transmission of a specific piece of image data with which the specific piece of metadata is associated to a specific moving object from which the specific piece of metadata is collected.

2. The method according to claim 1, wherein
the information includes a collection upper limit of the pieces of image data, and wherein
the determining of whether to request the transmission requests the transmission when a collected number does not reach the collection upper limit.

3. The method according to claim 1, wherein
the information includes a collection upper limit of the pieces of image data, and wherein
the determining of whether to request the transmission stops the request for the transmission when a collected number has reached the collection upper limit.

4. The method according to claim 1, wherein
the information includes a priority for collection of the pieces of image data, and wherein
the determining of whether to request the transmission delays the request for the transmission when the priority is relatively low.

5. The method according to claim 4, wherein
the determining of whether to request the transmission determines the priority based on a relationship between a collected number and an average of the collected numbers calculated based on a total sum of all the collected numbers of the pieces of image data in the map and a number of sections of the map.

6. The method according to any one of claims 1 to 5, the process further comprising:
updating a collected number of the specific piece of image data when the specific piece of image data transmitted from the specific moving object is collected.

7. A program comprising instructions which, when the program is executed by a computer, cause the computer to perform processing, the processing comprising:
collecting pieces of metadata associated with pieces of image data from a plurality of moving objects that hold the pieces of image data; and
determining, when a specific piece of metadata that satisfies a condition is found in the collected pieces of metadata, based on information for making collected numbers of the pieces of image data close to be an equalized value and a map that manages the collected numbers in a mesh shape, whether to request transmission of a specific piece of image data with which the specific piece of metadata is associated to a specific moving object from which the specific piece of metadata is collected.
